# EUROPÄISCHE PATENTSCHRIFT

(11) **EP 1 661 660 B1**
(45) Veröffentlichungstag und Bekanntmachung des Hinweises auf die Patenterteilung: **14.04.2010**
(21) Anmeldenummer: 05111246.4
(22) Anmeldetag: 24.11.2005
(51) Int. Cl.: B23P 15/40, B26B 9/00

(54) **Klinge und Verfahren zur Herstellung derselben**
Blade and method of manufacturing the same
Lame et procédé pour produire la même

(30) Priorität: 24.11.2004 DE 102004056771
(43) Veröffentlichungstag der Anmeldung: 31.05.2006
(73) Patentinhaber: Lutz Industria S.A., 2800 Delemont (CH)
(72) Erfinder: Lutz, Alexander, 42653, Solingen (DE); Lutz, Frieder, 42653, Solingen (DE)
(74) Vertreter: Gille Hrabal Struck Neidlein Prop Roos

(56) Entgegenhaltungen:
- EP-A- 1 245 380
- WO-A-03/009978
- WO-A-2004/078424
- DE-A1- 3 100 673
- DE-U1- 9 015 344
- DE-U1- 20 313 038
- GB-A- 929 806
- JP-A- 2002 370 192
- US-A- 3 279 283
- US-A- 3 685 373
- PATENT ABSTRACTS OF JAPAN Bd. 008, Nr. 120 (M-300), 6. Juni 1984 (1984-06-06) -& JP 59 024925 A (AKIRA KOSEKI), 8. Februar 1984 (1984-02-08)
- PATENT ABSTRACTS OF JAPAN Bd. 1996, Nr. 10, 31. Oktober 1996 (1996-10-31) -& JP 08 155153 A (TSUMURA KOGYO KK), 18. Juni 1996 (1996-06-18)

## Beschreibung

Die Erfindung betrifft eine Klinge, sowie ein Verfahren zur Herstellung von Klingen, insbesondere aus einem Endlosband.

Es ist bekannt, Klingen aus einem Endlosband, z.B. aus Stahl, dadurch zu fertigen, dass das Band einer Endlosbehandlung unterzogen wird, insbesondere einer solchen Stanz-, Schleif- oder Härtebehandlung, und erst anschließend das derart bearbeitete Band durch eine derartige Brechbearbeitung in einzelne Klingen unterteilt wird. Insbesondere das Endlosschleifen ist besonders wirtschaftlich, da das Band z. B. lediglich an einer stationären Härte- oder Schleifvorrichtung vorbeigezogen werden muss und bis zum Ende der Produktion keine Handhabung von vereinzelten Klingen notwendig ist. Auch kann die Vorsehung von Sollbruchstellen und Ausnehmungen, sowie das Härten, besonders wirtschaftlich in Rahmen einer Endlosbearbeitung vorgenommen werden. Das Endlosband wird meist in Form von Rollen angeliefert, weshalb bisher u.A. das Endlos-Schleifverfahren bei Klingen aus besonders harten, aber spröden Materialien wie zum Beispiel Hartmetall, Keramik und dergleichen als Grundkörper nicht in Frage kam. Klingen mit einem solchen Grundkörper sind daher sowohl wegen des Materialwertes als auch wegen der aufwendigeren, weil nicht endlosen Bearbeitung, teurer.

Die hochrationelle Endlosschleiftechnik schafft besonders preiswert Schneidkanten von hoher Qualität, erfordert jedoch Klingengrundkörper, die als Endlosband zur Verfügung gestellt werden. Besonders geeignet ist hier Stahl, insbesondere die Federbandstähle 1.4034 und 1.2002 und die HSS-Qualitäten 1.3333 und 1.3343. Häufig sind jedoch Klingen gewünscht, deren Schneiden härter, fester oder verschleißfester sind, als solche, die aus Stahl gefertigt sind. Diese Haltbarkeit wirkt sich insbesondere bei Maschinenmessern auf die Rentabilität der gesamten Schneidanlage, z. B. durch höhere Rüstkosten wegen häufigen Klingenwechsel, aus.

WO 03/009978 A und WO 2004/078424 A offenbaren je eine Klinge mit einem Grundkörper aus einem ersten Material Stahl und einer Schneidkante aus einem zweiten Material, wobei das zweite Material eine größere Härte als das erste Material aufweist und aus Hartmetall ist; der Grundkörper eine Wanddicke im Bereich von 0,3 - 1,4 mm aufweist, und der Grundkörper mit der Schneidkante entlang einer in Längsachsenrichtung des Grundkörpers verlaufenden oberen schmalen Kante des Grundkörpers über eine Schweißnaht fest verbunden ist.

JP-2002-370192 offenbart eine Klinge mit einem Grundkörper aus einem ersten Material Stahl und einer Schneidkante aus einem zweiten Material, wobei das zweite Material eine größere Härte als das erste Material aufweist und aus Hartmetall ist; der Grundkörper eine Wanddicke im Bereich von 1,2 mm aufweist, und der Grundkörper mit der Schneidkante entlang einer in Längsachsenrichtung des Grundkörpers verlaufenden oberen schmalen Kante des Grundkörpers über eine Kobalt- oder Nickellegierung fest verbunden ist.

JP-2002-370192 offenbart eine Klinge gemäß dem Oberbegriff des Anspruchs 5.

Es ist demzufolge Aufgabe der vorliegenden Erfindung, ein verbessertes Verfahren zur Herstellung von Klingen, sowie eine verbesserte Klinge zu schaffen.

Diese Aufgabe wird gelöst durch ein Verfahren und eine Klinge mit den Merkmalen der Hauptansprüche. Vorteilhafte Ausgestaltungen des Verfahrens sind Gegenstand der Unteransprüche.

Das erfindungsgemäße Verfahren zur Herstellung von Klingen verbindet in einem ersten Schritt einen preiswerten, als Endlosband vorliegenden Grundkörper mit einem zweiten, härteren und als Schneidkante dienenden Material zu einem Klingenrohling, dessen Schneidkante in einem zweiten Schritt durch eine Schleifbehandlung mit einer Schneidkante versehen wird und der optional in einem dritten Schritt in einzelne Klingen zerteilt wird. Eine solche Klinge wird auch als Verbundklinge bezeichnet. Dadurch ist es möglich, mittels der hochrationellen Endlosschleiftechnik auf preiswerte Weise qualitativ hochwertige Schneiden aus zum Beispiel Hartmetall oder Keramik zu schaffen. Der Grundkörper besteht weiterhin aus preiswerterem Material als die Schneidfläche. Der Begriff Endlosband im Sinne der Erfindung ist so zu verstehen, dass das Band zum Beispiel in Form einer Rolle oder einer Bahn bereitgestellt wird, deren Länge es ermöglicht, aus diesem eine Vielzahl von Klingen durch Zerteilen herzustellen. Insbesondere dient das Endlosband dazu, die Schleifbehandlung besonders rationell durchzuführen, indem die Schneidkante des Endlosbandes durch Vorbeiführen an der Schleifvorrichtung vor der Zerlegung in einzelne Klingen bearbeitet wird (Endlosschleifverfahren). Die Schneidkante besteht aus Hartmetall, Keramik, Titan, Diamant, PKD und vergleichbaren verschleißfeste Metalllegierungen, die für Schneidaufgaben einsetzbar sind.

Wenn einem weiteren Ausführungsbeispiel zufolge der Klingenrohling vor der Zerteilung in einzelne Klingen mit Sollbruchstellen oder Ausnehmungen versehen wird, so senkt dies Fertigungskosten. Sollbruchstellen dienen entweder dem Abtrennen ganzer Klingen während der Produktion oder ermöglichen dem Endnutzer später ein Verkürzen der Klinge ohne Werkzeug durch einfaches Abbrechen. Ausnehmungen ermöglichen ein besseres Einspannen und Positionieren der Klingen in einer Haltevorrichtung. Diese vorher eingebrachten Sollbruchstellen bzw. Ausnehmungen ermöglichen also entweder ein einfacheres Zerteilen der Endlosklinge während der Produktion ohne weiteres Sägen, Schneiden und dergleichen, oder das rationelle Fertigen dieser Sollbruchstellen an der Endlosklinge.

Wenn einem weiteren Ausführungsbeispiel zufolge erst die einzelnen Klingen mit Sollbruchstellen und/oder Ausnehmungen versehen werden, so ist es möglich, aus einem hochrationell, mittels Endlosschleiftechnik gefertigtem Endlosband, verschiedene Klingenvarianten mit zum Beispiel unterschiedlichen Sollbruchstellen und/oder Ausnehmungen zu fertigen.

Einem weiteren Ausführungsbeispiel zufolge lässt sich die Fertigung besonders wirtschaftlich und effektiv durchführen, wenn in einer Fertigungsstraße die einzelnen Verfahrensschritte gleichzeitig an einem, den Klingenrohling bildenden Endlosband vorgenommen werden.

Wenn die Schleifbehandlung gleichzeitig auf das zweite Endlosband bzw. die Segmente und das erste Endlosband wirkt, muss nur wenig von dem härteren Material des zweiten Endlosbandes bzw. der Segmente, dass eine aufwendigere Schleifbearbeitung benötigt, abgetragen werden.

Es ist, Löten, insbesondere Laserlöten, bei dem erfindungsgemäßen Verfahren zum Aneinanderfügen der beiden Metalle einzusetzen. Löten eignet sich wegen den im Vergleich zu den Schmelz bzw. Gefügeveränderungstemperaturen der Paarungspartnern, z. B. Stahl und Hartmetall, geringen Löttemperaturen besonders. Außerdem wird der Bimetall-Effekt, der auf den unterschiedlichen Wärmedehnungskoeffizienten der Paarungspartnern basiert, dadurch gemindert, dass beide Materialien nach dem Verbinden eine insbesondere im Vergleich zum Schweißen geringe Temperatur haben und daher beim Auskühlen nur geringe Eigenspannungen entstehen. Das abgekühlte Blatt verzieht sich daher kaum. Schließlich bildet Lot eine elastische Zwischenschicht, die ebenfalls einem Verziehen entgegenwirkt. Damit sind Verbindungen, wie z. B. Stahl-Hartmetall möglich, die nicht geschweißt oder nur schwer und heißer geschweißt werden können. Beim Laserlöten sind wegen der geringen Wärmeeinflusszone noch weniger Probleme zu erwarten. Eine Gefügeveränderung verschlechtert die Schneideigenschaften und die Haltbarkeit.

Wenn erfindungsgemäß zwischen den beiden aneinanderzufügenden Materialien, also den Verbindungspartnern eine Kupferlötfolie eingesetzt wird, dient diese als Federelement zwischen den beiden Partnern und die aus den unterschiedlichen Wärmedehnungen resultierenden Schubkräfte lassen sich minimieren. Dadurch wird insbesondere der zu Verkrümmungen führende Bimetalleffekt um die gefügte Schneidkante vermindert.

Wenn in einem weiteren Ausführungsbeispiel Segmente aus Hartmetall an das den Grundkörper bildende Endlosband gefügt werden, die als Schneidkante dienen, so sind Standardteile, insbesondere in eine Form gebrachte Hartmetall-Rohlinge, wie zum Beispiel runde, quadratische oder dreieckige Hartmetall-Rohlinge, verwendbar, die in großen Mengen preiswert hergestellt werden können. Derartig geformte Rohlinge können sogar derart symmetrisch sein, dass beim Fügen auf deren Ausrichtung keine Rücksicht genommen werden muss.

Da die Schneideigenschaft der Klinge im wesentlichen von der materialmäßig vergleichsweise vernachlässigbaren kleinen Schneidkante geprägt werden, ist es ausreichend, Segmente bzw. Endlösbänder mit einem Durchmesser 0,01-2 mm, vorzugsweise 0,03-0,8 mm und insbesondere vorzugsweise 0,1-0,5 mm zu verwenden. Dadurch sinkt der Schleifaufwand und die Bänder können gegebenenfalls sogar wegen des Glasfasereffekts gebogen bzw. gerollt werden. Die Durchmesserangabe bezieht sich nicht nur auf runde Profile, sondern sinngemäß auf beliebige zweckmäßige Profile, z. B. Quadrat, Rechteck, Dreieck, Fünfeck etc.

In einem weiteren Ausführungsbeispiel wird gezeigt, dass Hartmetall, Keramik, Titan, Diamant, PKD und vergleichbare verschleißfeste Metalllegierungen, die für Schneidaufgaben einsetzbar sind,besonders gut mit dem Grundkörper durch Löten verbunden werden kann, wenn vor dem Fügen ein oder beide die Fügepartner eine spezielle, die Verbindbarkeit erleichternde Vorbehandlung, erhalten haben. Z. B. kann das Hartmetall mit Silberlot oder die Keramik mit Aktivlot beschichtet werden.

Ein weiteres Ausführungsbeispiel verwendet ein zweites Endlosband aus Hartmetall oder Keramik, das durch Löten bzw. Weichlöten an das erste Endlosband fügbar ist, wodurch Gefügeveränderungen verhindert werden und auch herkömmliche Löttechnik zum Einsatz kommen kann. Ein als Rolle und dergleichen zur Verfügung gestelltes Endlosband wird erst durch das erfindungsgemäße Verfahren ermöglicht: Da die Keramik bzw. das Hartmetall lediglich die extrem dünne Schneidkante bilden muss, kann das Endlosband ebenfalls extrem dünn sein. Somit ist alles Material sehr dicht an der neutralen Faser, wodurch es entgegen der zu erwartenden Materialeigenschaften biegsam ist und nicht bricht. Dies entspricht dem bekannten Glasfasereffekt. Dieser besteht natürlich auch im gefügten Zustand, so dass die fertige Verbundklinge ebenfalls biegsam ist, sofern der Grundkörper entsprechend ausgelegt ist und eine Verbindung, wie z. B. Lot, ausgewählt wurde, die dieses zulässt. In der Regel ist aber das harte Schneidmaterial der kritische Faktor. Eine elastische Verbundklinge bietet den Vorteil einer hohen Biegebruchfestigkeit, welcher mit Vollmetallklingen aus spröden Materialien, wie z. B. HM, Keramik, etc., nicht erreicht werden kann.

In einem weiteren Ausführungsbeispiel ist der Schneidbereich symmetrisch ausgeführt, wodurch ein ebensolches Schneidverhalten erreicht wird. Aus dem Stand der Technik ist es dagegen bekannt, Schneidkanten seitlich an den Träger anzulöten, um dadurch eine vergleichsweise große Lötfläche zu erhalten. Derartige asymmetrische Schneiden sind bekannt aus DE-U-88 13 464 und DE-A-29 21 695.

Nachteilig ist dabei, dass je nach Schneidbelastung die separate Schneidkante entweder an den Träger herangedrückt bzw. von diesem weggezogen wird. Daraus kann ein unregelmäßiger Schnitt oder gar Versagen der Klinge oder Ausbrüche an der Klinge resultieren. Eine Symmetrie im Sinne der Erfindung liegt immer dann vor, wenn der Fügebereich zwischen Schneidkante und Grundkörper, also beispielsweise die Lötstelle, auf symmetrische Belastungen, also beispielsweise abwechselnd Druck von links oder rechts, auf gleiche Weise, also gleichgroßes Nachgeben nach rechts oder links, reagiert. Eine geringfügige Asymmetrie ist dabei durchaus hinnehmbar, beispielsweise in Form einer asymmetrischen Anfasung der Schneidkante.

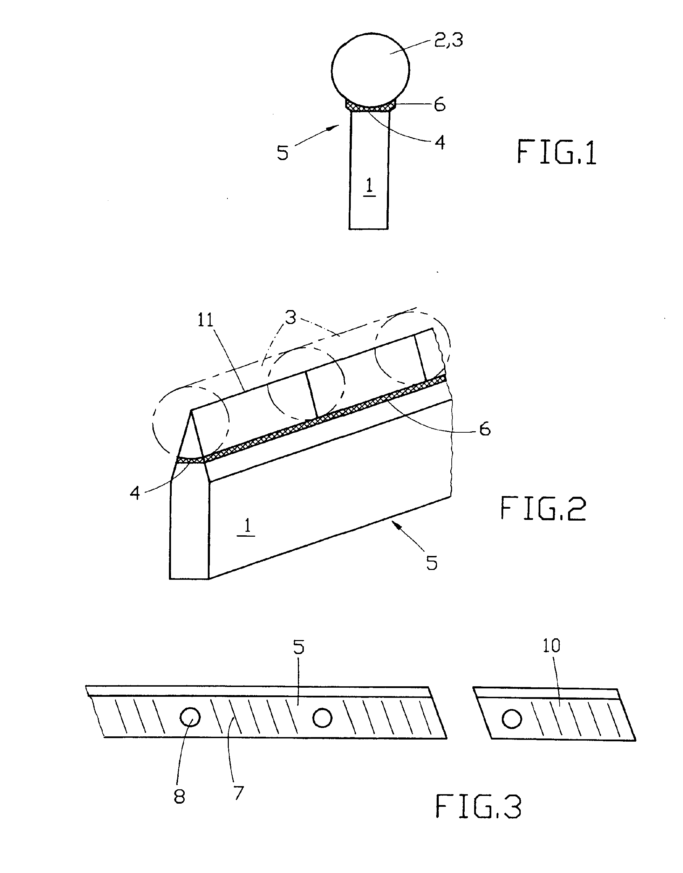

Am einfachsten ist die Symmetrie zu erzielen, wenn der Grundkörper einfach entlang seiner, entlang der Längsachse verlaufenden, Seitenkante mit der Schneidkante verbunden ist, wie zu Fig. 1-3 ausführlich erläutert. Das Schneidelement steht also gleichsam auf der dünnen Seitenkante des Grundkörpers und klebt nicht seitlich daran, wie beim oben genannten Stand der Technik. Dadurch wird nur sehr wenig hartes Material benötigt im Vergleich zum oben genannten Stand der Technik. Die Verbindungsflächen ermöglichen das Ableiten der Hauptschneidkräfte als Druckspannung in den Träger und vermeidet die Schub- und Scherspannungen, die bei seitlicher Befestigung auftreten würden.

In einer vorteilhaften Ausgestaltung ist vorgesehen, dass Seitenkante und Schneidkante ein gemeinsames, insbesondere reliefartiges, Profil aufweisen, wodurch sich die Kontaktfläche zwischen den beiden Elementen vergrößert. Dadurch sinken im Verbindungsbereich die Zug- bzw. Scherkräfte, so dass die Lötverbindung stabiler wird. Auch können die Flächen des Profils im Fügebereich derart ausgerichtet sein, dass sie selber Kräfte abfangen, beispielsweise dadurch, dass die Flächen in Richtung der zu erwartenden Druckbelastung wirken. Wesentlich ist, dass die Richtung einzelner Flächen des Profils, dass beispielsweise zick-zack-, zahn- oder wellenartig gestaltet ist, derart gewählt ist, dass eine für den erwarteten Belastungsfall günstige Krafteinleitung gewährleistet ist. Dabei ist sogar gegebenenfalls das mit besonders geringen Temperaturen durchführbare Weichlöten möglich, wodurch sogar sehr temperaturempfindliche Schneid- bzw. Trägermaterialien verwendet werden können. Dies gilt auch für die später erläuterten Nut-Feder- bzw. Einrast- oder Einschnapp-Verbindungen bzw. die Sandwichbauweise. Besonders sicher ist also die Verwendung von profilierten oder reliefartigen Flächen, insbesondere mit Hinterschneidungen, bei gleichzeitigem Weichlöten. Dabei entsteht weniger oder gar kein Verzug (sogenannter Bi-Metall-Effekt) durch die unterschiedlichen Wärmeausdehnungskoeffizienten der benachbarte Materialien, beispielsweise im Vergleich zum Schweißen.

In vorteilhafter Weise erstreckt sich das gemeinsame Profil entlang der Längsachse, so dass eine Herstellung im Endlosverfahren möglich ist, beispielsweise durch entsprechend geformte Fräser oder andere geeignete Formwerkzeuge.

Eine besonders stabile Verbindung wird dann hergestellt, wenn das gemeinsame Profil als Nut-Feder-Verbindung ausgeführt ist. So kann beispielsweise eine an der rückwärtigen Seite der Schneidkante vorgesehene Feder sehr tief in die in die Seitenkante eingebrachte Nut eingreifen. Dadurch werden die Zug- und Scherkräfte bei Belastung der Schneide auf eine größe Kontaktfläche abgeleitet. Es reduzieren sich die flächenbezogenen Kräfte.

Eine besonders vorteilhafte Ausgestaltung sieht darüber hinaus eine Einschnapp- und/oder Einrastverbindung zum Verbinden von Grundkörper und Schneidkante vor. Bei derartigen Verbindungen wird unter Überwindung eines elastischen Widerstandes eine formschlüssige Verbindung herbeigeführt. Dieser Formschluss kann so sein, dass die Verbindung durch Auseinanderziehen der beteiligten Elemente überwunden werden kann, beispielsweise dadurch, dass die seitlichen Flanken einer Nut bei einem Herausziehen der Feder durch die Feder gespreizt werden. Eine Einrastverbindung dagegen kann in der Regel nicht durch einfaches Auseinanderziehen der beiden Elemente bewirkt werden, da die Verriegelungsflächen senkrecht zur Zugrichtung wirken und kein Spreizen der Nut bewirken können. Eine solche Verbindung ist besonders sicher gegen Zugkräfte, so dass ein derart mit dem Grundkörper verbundener Schneidkörper auch durch eine seitliche Schneidbelastung verursachte Drehmomente durch Formschluss abfangen kann, so dass die Lötverbindung nur noch vergleichsweise geringe Kräfte aufnehmen muss und lagefixiert ist. Derartige Verbindungen vermögen also Zug- und/oder Druckkräfte aufzunehmen und das Lot zu entlasten.

Bei Einschnapp- bzw. Einrastverbindungen kommt es darauf an, dass einer der Verbindungspartner beim Verbinden elastisch nachgeben können, beispielsweise durch Spreizen der Nut. Daher sieht ein weiteres Ausführungsbeispiel einen verlängerten Nutgrund, also eine Verlängerung der Nut, in die die Feder nicht eingeführt werden kann, vor. Dadurch sinkt der elastische Widerstand der Nut beim Einführen der Feder, was das Einführen erleichtert. Die oben erläuterten Ausführungsbeispiele zeigen, dass ein Großteil aller auftretenden Kräfte durch eine formschlüssige Verbindung von Grundkörper und Schneidkante aufgenommen können, so dass auch gelötete Klingen für hohe Belastungen, die normalerweise nicht durch Löten herstellbar sind, realisiert werden können. Dadurch verbessert die Erfindung insbesondere den Stand der Technik, bei dem die Schneidkante mit dem Grundkörper durch Verschweißen verbunden wird. Bei entsprechender Auslegung dient der Lot nur noch als Kleber, sodass Weichlöten ausreichen kann. Laserlöten kann wegen der geringen Wärmeinflusszone sehr wirksam, wirtschaftlich und schonend eingesetzt werden durch direkte Erwärmung des randseitigen Lots, d. h. wo es für den Strahl direkt erreichbar ist, oder durch indirekte Erwärmung, z. B. im Nut-Feder-Bereich oder im Einschnapp- bzw. Einrastbereich über eine Erwärmung der Seitenflanken. Im letzteren Fall wird also viel Energie in die Seitenflanken, d. h. das weniger wärmeempfindliche Material eingebracht. Der Schneidkörper wird wegen des Wärmeübergangs und der beim Laserlöten extrem kurzen Wärmeeinbringungszeit nur gering belastet. Außerdem ist der belastete Bereich weit von der schneidaktiven Zone entfernt, so dass unter Berücksichtigung der Wärmeeinbringungszeit und der Wärmeleitfähigkeit, Oberfläche und Querschnitt des Schneidkörpers in der schneidaktiven Zone eine Wärmeschädigung beim Löten, insbesondere Laserlöten, vermieden werden kann.

Die Herstellung derartiger Klingen mit profilierter bzw. reliefartiger Fügezone kann beispielsweise wie folgt geschehen: 1) Herstellen von Schneidkanten und Grundkörper im Endlosverfahren, beispielsweise durch Fräsen oder Schleifen; 2) Benetzen des Fügebereichs von Grundkörper und/oder Schneidkante mit Lot; 3) Zusammenstecken des Schneidkörpers und des Grundkörpers; 4) Erwärmen der Fügezone zum Herstellen einer Lotverbindung.

Alternativ kann die Herstellung auch so geschehen: 1) Bereitstellen eines Trägerbandes mit profilierter Oberseite im Endlosverfahren, 2) Herstellen von Schneidkanten im Endlosverfahren, beispielsweise durch Fräsen oder Schleifen; 3) Benetzen von Trägerband und/oder des Fügebereichs der Schneidkante Lot; 4) Zusammenfalten oder Zusammenführen des Trägerbandes, derart, dass der Fügebereich des Schneidkörpers beidseitig mit dem/den Trägerbändern bedeckt ist ;4) Erwärmen der mit Lot benetzten Bereiche zum Herstellen einer Lotverbindung. Der Grundkörper wird also durch ein Trägerband gebildet, welches sandwichartig Teile der Schneidkante umklammert. Es können entweder zwei Trägerbänder aufeinander zu bewegt werden oder ein Trägerband wird um eine Kante, die als Scharnier wirkt, umgeklappt. Diese Kante kann anschließend entfernt werden. Durch eine Ausnehmung in der Kante wird das Scharnier gebildet. Die Hinterschneidungen im Träger sind also leichter Herzustellen und es ist kein elastisches Einschnappen/Einrasten nötig. Die beiden Trägerbänder können dabei ebenfalls gleichermaßen verlötet weden.

Schließlich kann der Träger auch sandwichartig zusammengesetzt sein, d. h. zwei Seitenflächen werden z. B. durch Löten miteinander verbunden. Die Seitenflächen können zuvor problemlos die für eine Nut-Feder- oder Einrast- bzw. Einschnappverbindung erforderliche Geometrie erhalten, ohne dass Hinterschneidungen zu bewerkstelligen sind, z. B. direkt bei der Herstellung durch eine entsprechende Form, durch Fräsen, Schleifen, spanabhebenden Verfahren, etc. Erst danach werden die beiden Hälften verbunden und es bildet sich erst dann die gewünschte Hinterschneidung. Dadurch ist insbesondere die Einrastverbindung mit den senkrecht wirkenden Verriegelungsflächen einfach herstellbar. Durch die großen Fügeflächen zwischen den Seitenflächen muss das Lot nur geringe Spannungen erdulden.

Der Schneidkörper kann dann entweder wie oben geschildert unter Überwindung eines Widerstandes eingedrückt werden oder beim Fügen der Seitenflächen eingelegt werden. Bei Letzterem erhöht sich die Stabilität, da der Träger keine federnde Geometrie bzw. federndes Material benötigt.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Die Erfindung wird im Folgenden anhand von den in den Zeichnungen dargestellten Ausführungsbeispielen eingehend erläutert, und zwar zeigt
- **Fig. 1**: den Klingenrohling vor der Schleifbehandlung im Querschnitt,
- **Fig. 2**: den Klingenrohling nach der Schleifbehandlung in der perspektivischen Ansicht,
- **Fig. 3**: eine Seitenansicht des fertig bearbeiteten Klingenrohlings vor und nach der Zerteilung in einzelne Klingen, und
- **Fig. 4a-d**: Klingenrohlinge mit Nut-Feder-Verbindung vor und nach der Schleifbehandlung im Querschnitt.

**Fig. 1** zeigt einen Querschnitt durch einen Klingenrohling 5 vor der Schleifbehandlung. Der Grundkörper 1 kann beispielsweise aus einem Endlosband aus Stahl bestehen, der eine Dicke von 0,3 bis 1,4 mm und insbesondere vorzugsweise 0,5 bis 1,4 mm aufweist. Ein weiteres Element 2, 3 ist über eine Fügestelle 6 an der oberen schmalen Kante 4 des Grundkörpers 1 mit diesem verbunden. Die Elemente 2, 3 dienen nach der Schleifbehandlung als Schneide/Schneidkante und sind daher aus festerem oder härterem Material als der Grundkörper 1. Im Ausführungsbeispiel werden Rohlinge, die preiswert massenhaft hergestellt werden können, mit einem Durchmesser von ca. 1 mm verwendet, die hier durch Löten mittels einer Kupferlötfolie 6 mit der oberen Kante 4 des Grundkörpers verbunden werden. Diese besteht aus eine beidseitig mit Lot versehenen Kupferfolie.

Beim Hartlöten treten Temperaturen von ca. 650° C auf, wodurch es im Grundkörper zu unerwünschten Gefügeveränderungen kommen kann. Eine weitere Begleiterscheinung sind unerwünschte Verwerfungen/Risse/Brüche (Bimetalleffekt) um die Kante 4, da die beiden zum Einsatz kommenden Materialien unterschiedliche Wärmeausdehnungskoeffizienten besitzen. Diesen unerwünschten Effekten begegnet man erfindungsgemäß dadurch, dass eine Kupferlötfolie eingesetzt wird, deren Kupferzwischenlage die Schubspannungen, die aus den unterschiedlichen Wärmedehnungen resultieren und nach dem Hartlöten auftreten, aufnimmt und damit beim Abkühlen ähnlich einem Federelement die Belastungen im Grundkörper 1 und der Schneidkante 2, 3 verringert.

**Fig. 2** zeigt den Klingenrohling 5 vor (gestrichelte Linien) und nach der Schleifbehandlung. Der Klingenrohling 5 liegt als rundes Endlosband vor, bestehend aus einem als Grundkörper dienenden Endlosband 1 aus Stahl, einer Lötschicht 6 und einer Vielzahl von aneinandergereihten und als Schneidkante dienenden Segmenten 3, z. B. Hartmetall- oder Keramikrohlinge.

**Fig. 2** zeigt ferner die Anordnung der Rohlinge 3 vor der Schleifbehandlung als gestrichelte Linien. Aus diesen wird die endgültige Schneidkante herausgeschliffen. Die Schleifbehandlung kann sowohl ausschließlich die Schneidkante, aber auch den Fügebereich 6 und den Grundkörper 1 umfassen, wie in **Fig. 2** zu erkennen ist.

**Fig. 3** zeigt den Klingenrohling 5, der eine Vielzahl von Klingen 10 umfasst, nach dem Einbringen von notwendigen Sollbruchstellen 7 und Ausnehmungen 8 und vor der Zerteilung, sowie die Klinge 10 als Endprodukt, nach Abtrennung vom fertigbehandelten Rohling 5 .

Das Verfahren zur Herstellung der beschriebenen Klinge umfasst mindestens die folgenden Schritte:

Ein erstes Endlosband 1 aus einem preiswerten Metall, zum Beispiel Stahl, wird mit einem zweiten, härteren und als Schneidkante dienenden Metall bzw. Material zum Beispiel Hartmetall oder Keramik 2, 3 verbunden. Anschließend erfolgt eine Schleifbearbeitung der Schneidkante 2, 3. Erst danach wird der aus Grundkörper 1 und Schneidkante 2, 3 bestehende Klingenrohling 5 in einzelne Klingen 10 zerteilt. Die Vorteile liegen in der Anwendbarkeit der hochrationellen Endlosschleifbearbeitung, die zudem eine qualitativ hochwertige Schneidkante bei Hartmetall- bzw. Keramik-Klingen erzeugt. Daraus resultieren Kostenvorteile aufgrund der rationelleren Fertigung und dem Einsatz von härteren und teureren Materialien lediglich als Schneidkante und nicht als Grundkörper.

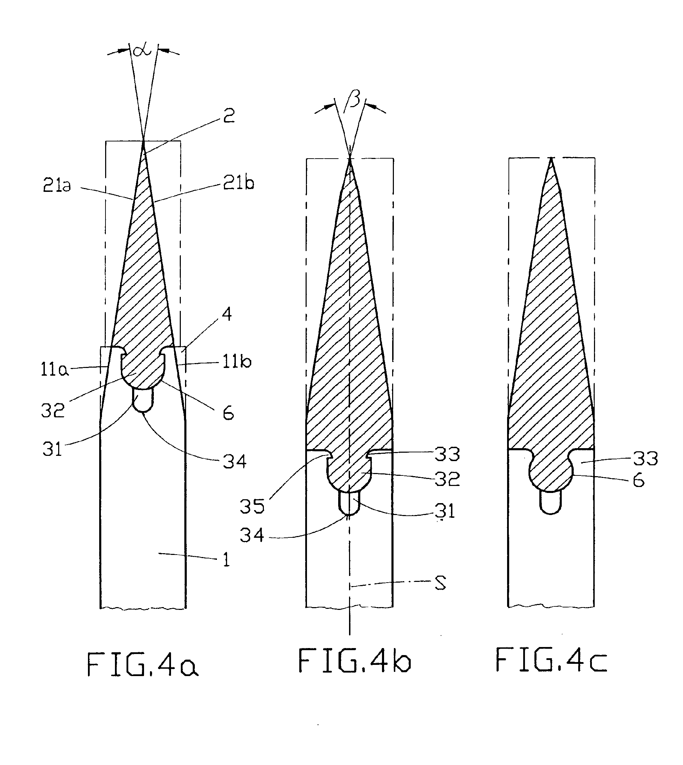

**Fig. 4a bis 4c** zeigen drei verschiedene Ausgestaltungen einer Nut-Feder-Verbindung zwischen der Schneide 2 und dem Grundkörper 1.

In **Fig. 4a** ist zu erkennen, dass der Grundkörper 1 eine Nut 31 aufweist, in die ein federartig gestalteter Teil 32 der Schneidkante 2 eingeführt ist. Über eine formschlüssige Verbindung wird die Feder 32 in der Nut 31 gehalten, wobei die im vergleichsweise elastischen Material des Grundkörpers 1 eingebrachte Nut 31 federnd spreizbar zum Einführen der Feder 32 ist. Das Spreizen wird erleichtert durch einen über die Eindringtiefe der Feder 32 hinausgehenden verlängerten Nutgrund 34. Der Nutgrund 34 kann auch schlitzartig sein und muss keinen Hohlraum bereitstellen, wobei letzterer den Vorteil hat, dass weniger Federkraft von der Nut ausgeübt wird. Ein Hohlraum ist auch bevorzugt, damit bei der Herstellung auftretende Verunreinigungen nicht zu einem dauerhaften Spreizen der Nut 31 führen können. Im Fügebereich 4 zwischen Schneidkante und Grundkörper sind diese durch eine Lötschicht 6 miteinander verbunden, die bereits vor dem Fügen im Fügebereich 4 die Feder der Schneidkante 2 benetzt hat und erst nach dem Zusammenstecken nochmals zum Herstellen einer Lötverbindung erhitzt wurde. Als gestrichelte Linie ist die ursprüngliche Form von Grundkörper und Schneidkante vor der abschließenden Schleifbehandlung zu erkennen.

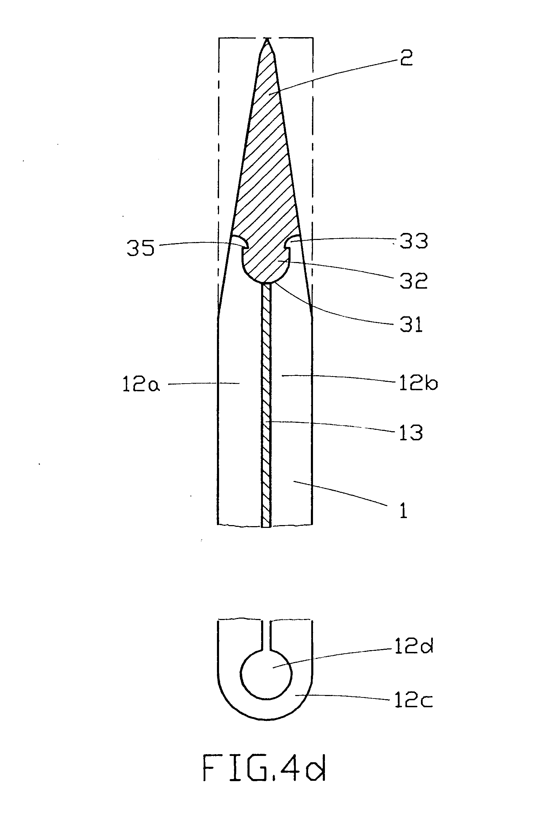

Im Ausführungsbeispiel aus **Fig. 4** **a** erfolgte gleichzeitig der Schliff der Seitenflanken 11 a, 11b und 21 a, 21 b von Grundkörper 1 und Schneidkante 2. Alle Flanken 11 a, 1 1 b, 21 a, 21 b weisen somit den gemeinsamen Winkel *α* auf. Dadurch wird besonders wenig des hochwertigen Materials zum Herstellen der Schneidkante 2 benötigt, wie man auch an der gestrichelten Linie, die die im Vergleich zum Grundkörper 1 schmalere Urform der Schneidkante 2 angibt, erkennen kann. Wegen des zuvor genannten Glasfasereffekt ist daher die besonders schmale Schneidkante 2 darüber hinaus besser biegbar, wodurch das gesamte System ebenfalls flexibler ist.

Unabhängig von den unter den Winkel *α* angeordneten Seitenflanken 21a, 21 b, kann die Schneidspitze eine unter dem größeren Winkel β sich schneidende Geometrie aufweisen, wie in **Fig. 4b** eingezeichnet. Dadurch ist die Schneide stabiler und hält länger. Es ist zu erkennen, dass die Nut Verriegelungsmittel 33, 35 aufweist, die in eine entsprechend geformte Verengung der Feder 32 eingreifen. Eine Verriegelungsfläche 35 ist dabei senkrecht zur Symmetrieachse S ausgerichtet, so dass die Schneidkante 2 nicht mehr herausgezogen werden kann. Es handelt sich dabei um eine Einrastverbindung.

**Fig. 4c** zeigt ein weiteres Ausführungsbeispiel mit einer Einschnappverbindung. Dabei fehlt die senkrechte Einschnappfläche 35 aus Fig. 4b und die Einschnürung 33 verläuft rund bzw. keilartig, derart dass unter Überwindung eines Widerstandes beim Herausziehen der Schneidkante 2 aus dem Grundkörper 1 ein Aufspreizen der Nut 31 verursacht wird. Eine derartige Fügestelle unterstützt somit durch Einschnappen die Lötverbindung, so dass beim Ergreifen beider Maßnahmen eine ausreichende Festigkeit der Verbindung gewährleistet ist. Die Einschnappverbindung ist leichter zu fertigen als eine Einrastverbindung.

Dagegen ist der Träger 1 bei der Klinge aus **Fig. 4d** aus zwei- möglichst identischen - Seitenflächen 12a, 12b sandwichartig zusammengesetzt, wobei diese durch eine Lötschicht 13 oder vergleichbare Verbindung mit einander verbunden sind. Die Herstellung der Geometrie der Fügestelle 4 und insbesondere der Einrastverbindung 31, 33, 35 macht keine Schwierigkeiten, da sich der Hohlraum zur Aufnahme der Feder 32 der Schneidkante 2 erst nach dem Zusammensetzten der Seitenflächen 12a, 12b bildet. Die Profilierung des Seitenflächen, um die daran angepasste Schneidkante zu halten, kann hier besonders einfach und im Endlosverfahren durchgeführt werden und es sind keine kleinen Werkzeuge nötig, die in die Nut hereinreichen müssen.

Das passgenaue Zusammenführen der beiden Seitenteile 12a,12b kann vorteilhaft erleichtert werden, wenn die Seitenteile über ein Scharnier 12c miteinander verbunden sind, d. h. um eine gemeinsame Kante gefaltet werden. Dieses Scharnier kann am einfachsten hergestellt werden durch eine Ausnehmung 12d in der gemeinsamen Kante.

Am effektivsten ist daher das Bereitstellen eines Trägerbandes, welches mindestens doppelt so breit ist, wie die Höhe des fertigen Trägers. Auf der Oberseite das Bandes werden die Ausnehmungen zum Halten der Schneidkante herausgefräst, ebenso wie eine mittig, entlang der Längsachse des Bandes verlaufende Kerbe. Diese dient als Scharnier und ermöglicht das Zusammenfalten des Bandes zum Träger. Der Scharnierbereich kann anschließend abgetrennt werden, um eine bessere Unterkante der Klinge zu erhalten.

## Patentansprüche

1. Verfahren zur Herstellung von Klingen mit einem ersten Endlosband (1) aus einem ersten Material, einem zweiten Endlosband (2) bzw. bandartig aneinanderzureihenden Segmenten (3) aus einem zweiten Material, wobei
das erste Material ein Stahl, insbesondere Federbandstahl ist; das zweite Material eine größere Härte als das erste Material aufweist und aus Hartmetall, Keramik, Titan, Diamant, PKD oder vergleichbaren verschleißfesten Metalllegierungen, die für Schneidaufgaben einsetzbar sind, ist;
das erste Endlosband eine Wanddicke 0,3 - 1,4 mm aufweist, mit folgenden Schritten:
- das erste Endlosband (1) wird an das zweite Endlosband (2) bzw. die Segmente (3) entlang einer in Längsachsenrichtung des ersten Endlosbandes (1) verlaufenden oberen schmalen Kante (4) des ersten Endlosbandes (1) durch Löten mittels einer Kupferlötfolie (6),die aus einer beidseitig mit Lot versehenen Kupferfolie besteht, gefügt zur Schaffung eines endlosen Klingenrohlings (5); und
- entlang der Längsachse des Klingenrohlings (5) im Bereich der Kante (4) wird eine Schleifbehandlung zur Schaffung einer Schneidkante durchgeführt, wobei die Schleifbehandlung zumindest auf das zweite Endlosband (2) bzw. die Segmente (3) wirkt.

2. Verfahren nach einem der vorherigen Ansprüche, **dadurch gekennzeichnet, dass** die Schleifbehandlung gleichzeitig auf das zweite Endlosband (2) bzw. die Segmente (3) und das erste Endlosband (1) wirkt.

3. Verfahren nach einem der vorherigen Ansprüche, **dadurch gekennzeichnet, dass** ein Aneinanderfügen des zweiten Endlosbandes bzw. der Segmente an das erste Endlosband mittels Laserlöten erfolgt.

4. Verfahren nach einem der vorherigen Ansprüche, **dadurch gekennzeichnet, dass** das zweite Endlosband (2) bzw. die Segmente (3) mit einem Durchmesser von 0,01-2 mm, vorzugsweise 0,03-0,8 mm und insbesondere vorzugsweise 0,1-0,5 mm verwendet werden und/oder das erste Endlosband eine Wanddicke von 0,5 - 1,4 mm aufweist.

5. Klinge mit einem Grundkörper (1) aus einem ersten Material Stahl, insbesondere Federbandstahl, und einer Schneidkante (2, 3) aus einem zweiten Material, wobei
- das zweite Material eine größere Härte als das erste Material aufweist, und aus Hartmetall, Keramik, Titan, Diamant, PKD oder vergleichbaren verschleißfesten Metalllegierungen, die für Schneidaufgaben einsetzbar sind, ist;
der Grundkörper eine Wanddicke von 0,3 - 1,4 mm aufweist,
- der Grundkörper (1) mit der Schneidkante (2, 3) über ein Lot fest verbunden ist.
**dadurch gekennzeichnet, dass**
- der Grundkörper (1) mit der Schneidkante (2,3) entlang einer in Längsachsenrichtung des Grundkörpers (1) verlaufenden oberen schmalen Kante (4) des Grundkörpers (1) durch eine gelötete Kupferlötfolie (6),die aus einer beidseitig mit Lot versehenen Kupferfolie besteht, verbunden ist.

6. Klinge nach einem der vorherigen Ansprüche, **dadurch gekennzeichnet, dass** die Klinge ein symmetrisches Profil hat oder das Profil zumindest im Bereich der Schneidkante symmetrisch ist.

7. Klinge nach einem der vorherigen Ansprüche, **dadurch gekennzeichnet, dass** der Grundkörper (1) an seiner entlang seiner Längsachse verlaufenden Seitenkante (4) mit der Schneidkante (2, 3) verbunden ist.

8. Klinge nach einem der vorherigen Ansprüche, **dadurch gekennzeichnet, dass** die Seitenkante (4) und die Schneidkante (2, 3) ein gemeinsames Profil (6), insbesondere ein reliefartiges Profil (6), aufweisen.

9. Klinge nach einem der vorherigen Ansprüche, **dadurch gekennzeichnet, dass** das reliefartige Profil (6) als Nut-Feder-Verbindung (31,32) ausgeführt ist, wobei insbesondere die Nut-Feder-Verbindung (31,32) als Einschnapp und/oder Einrastverbindung ausgeführt ist, wobei ferner vorzugsweise die Nut (31) im Grundkörper (1) ausgebildet ist und einen verlängerten Nutgrund (34) aufweist, derart dass die (31) Nut durch Einführen der Feder (32) gespreizt werden kann.

10. Klinge nach einem der vorherigen Ansprüche, **dadurch gekennzeichnet, dass** der Grundkörper (1) zwei miteinander verlötete Seitenflächen (12a,12b) aufweist.

11. Klinge nach einem der vorherigen Ansprüche, **dadurch gekennzeichnet, dass**
- die Schneidkante (2, 3) zwei in einem ersten spitzen Winkel (α) zueinander verlaufende Schneidflanken (21a, 21 b) aufweist, die sich unter dem ersten Winkel (α) oder einem zweiten, größeren Winkel (β) berühren, und
- der Grundkörper (1) zwei in dem ersten Winkel (α) zueinander verlaufende und sich nicht berührende Flanken (11a, 11b) aufweist, und
- die Schneidflanken (21a, 21b) stufenlos in die Flanken (11a, 11 b) übergehen.

12. Klinge nach einem der vorherigen Ansprüche, **dadurch gekennzeichnet, dass** der Grundkörper und optional die Schneidkante aus einem Band herausgetrennt ist.

13. Klinge nach einem der vorherigen Ansprüche, **dadurch gekennzeichnet, dass** auf dieser parallel zueinander verlaufende Sollbruchstellen (7) vorgesehen sind, die winkelig zur Längsachse der Klinge stehen und/oder Ausnehmungen (8) in der Klinge vorgesehen sind.

14. Klinge nach einem der vorherigen Ansprüche, **dadurch gekennzeichnet, dass** die Schneidkante (2, 3) derart dimensioniert ist und der Grundkörper derart ausgewählt ist und Grundkörper und Schneidkante derart miteinander verbunden sind, dass die Klinge elastisch biegbar ist.

## Claims

1. Method for the production of blades with a first continuous strip
(1) from a first material, a second continuous strip (2) or segments (3) from a second material to be placed next to one another in a strip-like manner, wherein
the first material is a steel, in particular spring band steel;
the second material has a greater hardness than the first material and consists of hard metal, ceramics, titanium, diamond, PCD or comparable wear-resistant metal alloys that can be used for cutting tasks;
the first continuous strip has a wall thickness of 0.3 - 1.4 mm; comprising the following steps:
- in order to create a continuous blade blank (5), the first continuous strip (1) is joined, by soldering by means of a copper soldering film (6) consisting of a copper film provided on both sides with soldering material, to the second continuous strip (2) or the segments (3) along a upper narrow edge (4) of the first continuous strip (1) extending in the direction of the longitudinal axis of the first continuous strip (1); and
- a grinding treatment is carried out along the longitudinal axis of the blade blank (5) in the area of the edge, in order to create a cutting edge, wherein the grinding treatment acts at least on the second continuous strip (2) or the segments (3).

2. Method according to any of the preceding claims, **characterised in that** the grinding treatment acts simultaneously on the second continuous strip (2) or the segments (3) and on the first continuous strip (1).

3. Method according to any one of the preceding claims, **characterised in that** the second continuous strip or the segments are joined to the first continuous strip by laser soldering.

4. Method according to any one of the preceding claims, **characterised in that** the second continuous strip (2) or the segments (3) are used with a diameter of 0.01-2mm, preferably 0.03-0.8 mm, and particularly preferably 0.1-0.5 mm and/or that the first continuous strip has a wall thickness of 0.5 to 1.4 mm.

5. Blade with a basic body (1) from a first material steel, in particular spring band steel, and a cutting edge (2, 3) from a second material, wherein
- the second material has a greater hardness than the first material and consists of hard metal, ceramics, titanium, diamond, PCD or comparable wear-resistant metal alloys that can be used for cutting tasks;
the basic body has a wall thickness of 0.3 to 1.4 mm,
- the basic body (1) is connected with the cutting edge (2, 3) by means of a soldering material.
**characterised in that**
the basic body (1) is joined with the cutting edge (2, 3) along an upper narrow edge (4) of the basic body (1) extending in the direction of the longitudinal axis of the basic body (1) by means of a soldered copper soldering film (6) consisting of a copper film provided on both sides with soldering material.

6. Blade according to any one of the preceding claims, **characterised in that** the blade has a symmetrical profile or that the profile is symmetrical at least in the area of the cutting edge.

7. Blade according to any one of the preceding claims, **characterised in that** the basic body (1) is joined to the cutting edge (2, 3) on its lateral edge (4) extending along its longitudinal axis.

8. Blade according to any one of the preceding claims, **characterised in that** the lateral edge (4) and the cutting edge (2, 3) comprise a common profile (6), in particular a relief-like profile (6).

9. Blade according to any one of the preceding claims, **characterised in that** the relief-like profile (6) is configured as a tongue-and-groove connection (31, 32), wherein in particular the tongue-and-groove connection (31, 32) is configured as a snap-in or latching connection, wherein, moreover, the groove (31) is preferably formed in the basic body (1) and comprises an extended groove bottom (34), such that the groove (31) can be spread apart by introducing the tongue (32).

10. Blade according to any one of the preceding claims, **characterised in that** the basic body (1) comprises two lateral surfaces (12a, 12b) soldered together.

11. Blade according to any one of the preceding claims, **characterised in that**
- the cutting edge (2, 3) comprises two cutting flanks (21a, 21b) extending in a first acute angle (α) relative to each other, which touch at the first angle (α) or a second larger angle (β), and
- the basic body (1) comprises two flanks (11a, 11b) extending in a first acute angle (α) relative to each other which do not touch each other, and
- the cutting edges (21a, 21 b) merge continuously into the flanks (11a, 11b).

12. Blade according to any one of the preceding claims, **characterised in that** the basic body, and optionally the cutting edge is cut out from a strip.

13. Blade according to any one of the preceding claims, **characterised in that** predetermined breaking points (7) are provided on it that extend parallel to each other and that are angled relative to the longitudinal axis of the blade, and/or that recesses (8) are provided in the blade.

14. Blade according to any one of the preceding claims, **characterised in that** the cutting edge (2, 3) is dimensioned such, and that the basic body is selected such, and that the basic body and the cutting edge are connected with each other such that the blade is resiliently bendable.

## Revendications

1. Procédé de fabrication de lames, comprenant une première bande sans fin (1) constituée d'un premier matériau, une seconde bande sans fin (2) ou des segments (3) à aligner l'un après l'autre en forme de bande d'un second matériau, dans lequel
le premier matériau est un acier, en particulier de l'acier feuillard pour ressorts ; le second matériau présente une plus grande dureté que le premier matériau et est formé de métal dur, de céramique, de titane, de diamant, de diamant polycristallin (PKD) ou d'alliages métalliques comparables résistant à l'usure, qui
sont utilisables pour des travaux de coupe ;
la première bande sans fin présente une épaisseur de paroi de 0,3 à 1,4 mm, comprenant les étapes suivantes :
- on joint la première bande sans fin (1) à la seconde bande sans fin (2) ou aux segments (3) le long d'une arête supérieure étroite (4) de la première bande sans fin (1), s'étendant dans la direction de l'axe longitudinal de la première bande sans fin (1), par brasage au moyen d'une feuille de brasage de cuivre (6), qui est constituée d'une feuille de cuivre pourvue de chaque côté de métal d'apport de brasage, pour créer une ébauche de lame sans fin (5) ; et
- le long de l'axe longitudinal de l'ébauche de lame (5), dans la zone de l'arête (4), on effectue un traitement de meulage pour créer une arête de coupe, le traitement de meulage agissant au moins sur la seconde bande sans fin (2) ou sur les segments (3).

2. Procédé selon l'une quelconque des revendications précédentes, **caractérisé en ce que** le traitement de meulage agit en même temps sur la seconde bande sans fin (2) ou sur les segments (3) et la première bande sans fin (1).

3. Procédé selon l'une quelconque des revendications précédentes, **caractérisé en ce que** l'on opère une jonction entre la seconde bande sans fin ou les segments et la première bande sans fin par brasage au laser.

4. Procédé selon l'une quelconque des revendications précédentes, **caractérisé en ce que** la seconde bande sans fin (2) ou les segments (3) est/sont utilisé(e)s avec un diamètre de 0,01 à 2 mm, de préférence de 0,03 à 0,8 mm et, mieux encore, de 0,1 à 0,5 mm et/ou la première bande sans fin présente une épaisseur de paroi de 0,5 à 1,4 mm.

5. Lame comprenant un corps de base (1) constitué d'un premier matériau de type acier, en particulier de l'acier feuillard pour ressorts, et une arête de coupe (2, 3) constituée d'un second matériau, dans laquelle :
- le second matériau présente une dureté supérieure à celle du premier matériau et est constitué de métal dur, de céramique, de titane, de diamant, de diamant polycristallin (PKD) ou d'alliages métalliques comparables résistant à l'usure, qui sont utilisables pour des travaux de coupe ;
le corps de base présente une épaisseur de paroi de 0,3 à 1,4 mm,
- le corps de base (1) est lié solidement à l'arête de coupe (2, 3) par le biais d'un métal d'apport de brasage,
**caractérisée en ce que**
- le corps de base (1) est lié à l'arête de coupe (2,3) le long d'une arête supérieure étroite (4) du corps de base (1), étroite, supérieure, s'étendant dans la direction de l'axe longitudinal du corps de base (1), par une feuille de brasage de cuivre (6) brasée, qui est constituée d'une feuille de cuivre pourvue de chaque côté d'un métal d'apport de brasage.

6. Lame selon l'une quelconque des revendications précédentes, **caractérisée en ce que** la lame a un profil symétrique ou le profil est symétrique au moins dans la zone de l'arête de coupe.

7. Lame selon l'une quelconque des revendications précédentes, **caractérisée en ce que** le corps de base (1) est lié à l'arête de coupe (2, 3) sur son arête latérale (4) s'étendant le long de son axe longitudinal.

8. Lame selon l'une quelconque des revendications précédentes, **caractérisée en ce que** l'arête latérale (4) et l'arête de coupe (2, 3) présentent un profil commun (6), en particulier un profil en relief (6).

9. Lame selon l'une quelconque des revendications précédentes, **caractérisée en ce que** le profil en relief (6) se présente sous la forme d'un assemblage à rainure et languette (31,32), dans laquelle l'assemblage à rainure et languette (31,32), en particulier, se présente sous la forme d'un raccord à encliquetage et/ou à enclenchement, dans laquelle la rainure (31) est en outre formée de préférence dans le corps de base (1) et présente un fond de rainure prolongé (34) de sorte que la rainure (31) puisse être écartée par introduction de la languette (32).

10. Lame selon l'une quelconque des revendications précédentes, **caractérisée en ce que** le corps de base (1) présente deux surfaces latérales (12a,12b) brasées l'une avec l'autre.

11. Lame selon l'une quelconque des revendications précédentes, **caractérisée en ce que**
- l'arête de coupe (2, 3) présente deux flancs de coupe (21a, 21b) s'étendant l'un par rapport à l'autre selon un premier angle aigu (α), qui se touchent en formant le premier angle (α) ou un second angle (β) plus grand, et
- le corps de base (1) présente deux flancs (11a, 11b) s'étendant l'un par rapport à l'autre selon le premier angle (α) et ne se touchant pas, et
- les flancs de coupe (21a, 21b) se fondent en continu dans les flancs (11a, 11b).

12. Lame selon l'une quelconque des revendications précédentes, **caractérisée en ce que** le corps de base et éventuellement l'arête de coupe est/sont extrait (s) d'une bande.

13. Lame selon l'une quelconque des revendications précédentes, **caractérisée en ce que** l'on prévoit des points de rupture théoriques (7) s'étendant sur celle-ci parallèlement l'un à l'autre, qui font un angle avec l'axe longitudinal de la lame, et/ou des évidements (8) dans la lame.

14. Lame selon l'une quelconque des revendications précédentes, **caractérisée en ce que** l'on dimensionne l'arête de coupe (2, 3), on choisit le corps de base et on lie le corps de base et l'arête de coupe l'un à l'autre de sorte que la lame soit flexible de manière élastique.
